# NEUE EUROPÄISCHE PATENTSCHRIFT

(11) **EP 3 610 763 B2**
(45) Veröffentlichungstag und Bekanntmachung des Hinweises auf die Entscheidung über den Einspruch: **20.08.2025**
(45) Hinweis auf die Patenterteilung: 07.04.2021
(21) Anmeldenummer: 18189304.1
(22) Anmeldetag: 16.08.2018
(51) Int. Cl.: A47J 31/54

(54) **KAFFEEMASCHINE ZUM ZUBEREITEN EINES HEISSGETRÄNKS**
COFFEE MACHINE FOR PREPARING A HOT DRINK
MACHINE À CAFÉ DESTINÉE À PRÉPARER UNE BOISSON CHAUDE

(43) Veröffentlichungstag der Anmeldung: 19.02.2020
(73) Patentinhaber: CUP&CINO Kaffeesystem-Vertrieb GmbH & Co. KG, 33161 Hövelhof (DE)
(72) Erfinder: Epping, Frank Josef Paul, 33161 Hövelhof (DE)
(74) Vertreter: BOVARD AG

(56) Entgegenhaltungen:
- EP-A1- 0 011 290
- EP-A1- 0 201 656
- EP-A1- 0 335 250
- EP-A1- 0 948 926
- EP-A1- 1 360 918
- EP-A1- 1 380 243
- EP-A1- 1 529 470
- EP-A1- 1 882 433
- EP-A1- 2 397 054
- EP-A1- 2 481 329
- EP-A1- 2 497 398
- EP-A1- 2 537 449
- EP-A1- 2 583 596
- EP-B1- 1 322 896
- EP-B1- 1 450 655
- EP-B1- 1 764 014
- EP-B1- 1 967 101
- EP-B1- 2 070 458
- EP-B1- 2 129 270
- EP-B1- 2 133 011
- EP-B1- 2 143 360
- EP-B1- 2 314 183
- EP-B1- 2 571 411
- EP-B1- 2 582 272
- EP-B1- 2 582 273
- EP-B1- 2 872 016
- EP-B1- 2 991 530
- EP-B1- 3 053 495
- EP-B1- 3 057 476
- EP-B1- 3 057 481
- EP-B1- 3 062 667
- EP-B1- 3 107 434
- WO-A1-01/54551
- WO-A1-2006/050856
- WO-A1-2008/144471
- WO-A1-2008/150172
- WO-A1-2012/022114
- WO-A1-2014/187837
- WO-A1-2014/205771
- WO-A1-2015/039264
- WO-A1-2015/055343
- WO-A1-2015/161132
- WO-A1-2016/034255
- WO-A1-2017/046099
- WO-A1-2017/068522
- WO-A1-2017/155400
- WO-A1-2017/174399
- WO-A1-2017/186822
- WO-A1-2018/029125
- WO-A1-2018/136689
- WO-A1-2018/234241
- WO-A1-2019/090381
- WO-A1-91/07898
- WO-A2-2011/151703
- WO-A2-2018/029538
- AT-B- 188 457
- AU-A1- 2015 202 472
- CN-A- 101 889 818
- CN-A- 106 691 201
- CN-A- 107 115 020

## Beschreibung

### Technisches Gebiet der Erfindung

Die vorliegende Erfindung bezieht sich auf eine Kaffeemaschine zum Zubereiten eines Heissgetränks, insbesondere eine Kaffeemaschine mit einem Heizsystem für ein dynamisches Heizmanagement.

### Hintergrund der Erfindung

Bekannte Kaffeemaschinen zum Zubereiten von Heissgetränken weisen ein Heizsystem mit Heisswassereinheiten zum Bereitstellen von Brühwasser und/oder Wasserdampf auf. Heisses Brühwasser wird eingangsseitig einer in der Kaffeemaschine vorgesehenen Brühvorrichtung bzw. Brüheinheit zugeführt und ausgangsseitig fertig gebrühter Kaffee ausgegeben. Hierfür wird im Allgemeinen Wasser aus einem Wassertank mittels einer Pumpe oder ähnlicher Einrichtung gefördert und in einer oder mehreren Heizeinrichtungen auf eine gewünschte Temperatur erhitzt. Bekannt als Heizeinrichtung sind neben einfachen Durchlauferhitzern, welche nur einen geringen Volumenstrom an Brühwasser bereitstellen, auch Boiler, in denen grössere Mengen an Brühwasser auf eine gewünschte Temperatur erwärmt werden kann. Hierbei wird Brühwasser in einem mehr oder weniger grossen Brühwassertank komplett erhitzt und dann der oder auch mehreren Brüheinheit zugeleitet. Dies ist insbesondere bei Kaffeemaschinen für eine professionelle Verwendung in Cafes oder Bars relevant, welche für eine erhöhte Beanspruchung gerüstet sind und mit welchen demnach einige hundert bis tausend Kaffeeportionen ungleichmässig über den Tag verteilt zubereitet werden.

Bekannt ist der Einsatz mehrerer Boiler in professionellen Kaffeemaschinen, um eine stabile Temperaturkonstanz zu erreichen und auch um den Energieverbrauch zu drosseln, welcher durch Erhitzen und Halten der Temperatur einer grossen Wassermenge verursacht wird. Dabei kann der zweite Boiler ein wesentlich kleineres Wasservolumen bevorraten und direkt der Brühvorrichtung zugeordnet sein, um das Brühwasser auf eine zweite Temperatur, die Brühtemperatur, zu erhitzen.

Eine als Boiler ausgebildete Heizeinrichtung umfasst im Allgemeinen in einem unteren Bereich ein als Heizwendel ausgebildetes Heizelement, wobei sich in dem Boiler eine Temperaturschichtung ausbildet. Dabei wird dem Boiler von einer Wasserquelle kaltes Wasser mittels einer Pumpe über einen im unteren oder im mittleren Bereich des Boilers angeordneten Zulauf zugeführt, und erwärmtes Brühwasser aus einem oberen Bereich über einen Brühwasserablauf ausgegeben bzw. abgezogen.

Neben der Erzeugung von heissem Brühwasser ist für die Zubereitung von Heissgetränken, insbesondere Kaffeespezialitäten, auch die Bereitstellung von Wasserdampf wünschenswert. Wasserdampf kann z.B. zum Aufschäumen von Milch genutzt werden. Bekannt sind kombinierte Systeme, bei denen der umfasste Boiler auch eingerichtet ist, um neben erwärmtem Brühwasser Wasserdampf zu erzeugen. Komfortable Kaffeemaschinen sehen allerdings getrennte Einrichtungen vor, um einerseits erwärmtes Brühwasser und andererseits Wasserdampf zu erzeugen.

In jedem Fall strömt das erhitzte Brühwasser von der Heizeinrichtung zur Brühvorrichtung entlang einer gewissen Wegstrecke, so dass je nach Art, Zeitpunkt und Häufigkeit vorausgehender Brühvorgänge, die Temperatur des Brühwassers für den eigentlichen Brühvorgang und damit auch die zu erzielende Brühqualität schwanken. Die Brühqualität ist stark von der Brühtemperatur abhängig, so dass eine ideale Brühtemperatur je nach Kaffeespezialität, z.B. Espresso, Milchkaffee, Cappuccino, unterschiedlich ist, aber insbesondere konstant sein sollte. Demnach zeichnet sich eine Kaffeemaschine einerseits durch eine grosse thermische Stabilität auf, um Temperaturschwankungen des Brühwassers zu minimieren, welche bei einem kontinuierlichen Bezug von Wasser bemerkbar sind. Andererseits sollte eine geringe thermische Trägheit vorhanden sein, damit eine schnelle Reaktion und Anpassung an die geforderte Temperatur erfolgen kann, insbesondere nach Abschalten und Wiederaufnehmen des Betriebs der Kaffeemaschine.

Aus WO 2017/068522 ist eine professionelle Kaffeemaschine mit einer Abgabevorrichtung für Kaffee, sowie Dampf und heisses Wasser zur Zubereitung von Tee und anderem bekannt. Vorgesehen ist ein Boiler, in welchen zugeführtes kaltes Wasser erhitzt wird und in dem das erhitzte Wasser im Gleichgewicht mit Dampf steht, welcher zur weiteren Verwendung entnommen werden kann. Mindestens ein Wärmetauscher steht in thermischem Kontakt mit dem erhitzten Wasser im Boiler, so dass dadurch Wasser auf eine erste Temperatur erhitzt und stromabwärts mittels eines weiteren Temperaturgesteuerten Heizelements auf eine bestimmbare Brühtemperatur weiter erhitzt wird. Über einen eventuell vorgesehenen zweiten in thermischem Kontakt mit dem Boiler stehenden Wärmetauscher kann Wasser mit einer anderen Temperatur zur Zubereitung von Tee bereitgestellt werden.

Ferner ist aus US 6 701 068 eine mehrstufige Heizeinrichtung für eine Kaffeemaschine bekannt, wobei eine erste und eine zweite Heizvorrichtung entlang des Strömungsweges des zu erhitzenden Brühwassers vorgesehen sind. Insbesondere soll durch die zweite Heizvorrichtung ein Temperaturverlust stromabwärts der ersten Heizvorrichtung ausgeglichen werden.

### Zusammenfassung der Erfindung

Der vorliegenden Erfindung liegt die Aufgabe zugrunde, eine Kaffeemaschine zum Zubereiten eines Heissgetränks bereitzustellen, die für eine Zubereitung von Kaffeespezialitäten als auch eine Zubereitung von Tee und dergleichen eine möglichst optimal individuell einstellbare Temperatur des Brühwassers gewährleistet. Dabei kann sowohl eine konstante Temperatur eingestellt werden oder auch ein Temperaturprofil bzw. Temperaturverlauf erzeugt werden, wobei das Brühwasser während des Brühvorgangs definiert erhitzt wird. Insbesondere soll eine Kaffeemaschine auch für professionelle Anwendung bereitgestellt werden, die in der Lage ist, heisses Brühwasser in ausreichender Menge für unterschiedliche spezielle Verwendungen auf eine einstellbare optimale Temperatur schnell und verlässlich zu erwärmen.

Diese Aufgaben werden erfindungsgemäss durch den Gegenstand des Anspruchs 1 gelöst. Weitere vorteilhafte Merkmale ergeben sich aus den abhängigen Patentansprüchen, der nachfolgenden Beschreibung sowie der Zeichnungen.

Die erfindungsgemässe Kaffeemaschine zum Zubereiten eines Heissgetränks umfasst einen Gehäuserahmen, in welchen ein Wassermodul und ein Brühmodul aufgenommen sind. Ferner kann ein Dampfmodul zur Erzeugung und Abgabe von Wasserdampf in dem Gehäuserahmen angeordnet sein. Die einzelnen Module sind in dem Gehäuserahmen der Kaffeemaschine zusammengefasst und elektrisch sowie fluidleitend miteinander verbindbar. Die einzelnen Module können mittels individueller ihnen zugeordneter Steuereinrichtungen und/oder mit einer zentralen Steuereinheit gesteuert werden. Die Kaffeemaschine umfasst ein Heizsystem für ein dynamisches Heizmanagement mit steuerbaren Heizeinrichtungen, welche teilweise in dem Brühmodul und teilweise in dem Wassermodul aufgenommen sind.

Das Wassermodul zum Bereitstellen von Brühwasser umfasst eine erste Heizeinrichtung, umfassend einen Boiler mit einem Frischwasserzulauf und mit einem ersten Heizelement zum Bereitstellen von Wasser, erwärmt auf eine erste Temperatur T₁. Das Wassermodul ist seinerseits modular aufgebaut und in einem Wassermodulgehäuse aufgenommen. Neben der ersten Heizeinrichtung sind weitere Einrichtungen umfasst, beispielsweise ein Leitungssystem, sowie Pumpen, Ventile, Dossiereinrichtungen und Sensoren, zur Bereitstellung von erwärmtem und dosiertem Brühwasser, welches in einer ersten Stufe auf die erste Temperatur T₁ erwärmt wird. Die erste Temperatur T₁ liegt vorzugsweise im Bereich zwischen 70°C und 85°C. Die Temperatur T₁ ist insbesondere geringfügig niedriger als eine optimale Temperatur zur Zubereitung einer bestimmten Kaffeespezialität mit hoher Qualität.

Erfindungsgemäss ist die erste Heizeinrichtung als Boiler ausgebildet, wobei ein Wassertank mit einem an den Bedarf angepasstes Fassungsvolumen vorgesehen ist, in welchen über eine Pumpe Wasser, bevorzugt kaltes Wasser, über einen vorzugsweise im unteren Bereich angeordneten Wassereinlass eingeleitet wird. Der Füllgrad an Wasser bzw. der Wasserstand kann mittels Sensoren ermittelt werden und steht als Parameter der Steuerung zur Verfügung. Boiler in Zusammenhang mit Heissgetränkezubereitern sind bereits bekannt und können demnach als Standardteil kostengünstig eingesetzt werden. Beispielsweise kann ein Heizelement des Boilers als ein- oder mehrstufige Heizwendel ausgebildet sein, die im Inneren des Wassertanks angeordnet ist, und insbesondere sich durch einen hohen Wirkungsgrad auszeichnet. Der Boiler ist eingerichtet, ein gewisses Wasservolumen auf die erste Temperatur T₁ zu erwärmen und dieses bis zur weiteren Verwendung zu bevorraten. Die Temperatur des in dem Boiler erhitzten Wassers kann mittels eines oder mehrerer Temperatursensoren und einer Steuereinrichtung bzw. einer zentralen Steuereinheit gesteuert werden, wobei diese auf das Heizelement steuernd wirkt.

Das Brühmodul weist eine Brühvorrichtung zum Brühen einer vorgegebenen Menge an Kaffee mit Brühwasser und eine Ausgabeeinheit zur Abgabe gebrühten Kaffees auf, sowie eine in einer Brühwasser-Zulaufleitung angeordnete zweite Heizeinrichtung, um damit das auf die erste Temperatur T₁ erwärmte Wasser auf eine zweite Temperatur T₂ zu erhitzen. Das Brühmodul kann in einem Brühmodulgehäuse neben der Brühvorrichtung und der Ausgabeeinheit Einrichtungen aufweisen, um Brühwasser unter Druck mit einer definierten Temperatur in eine Brüheinheit mit einer Brühkammer zur Aufnahme der vorgegebenen Kaffeemenge dosiert einzuleiten. Dabei kann der sogenannte Brühdruck während des Brühvorgangs, d.h. während der Extraktion variieren. Im Allgemeinen beträgt der Brühdruck ca. 9 bar. In einer Ausführungsform umfasst die Brühvorrichtung eine Halterung, in welche ein Siebträger mit Sieb aufnehmbar ist, in den eine definierte Menge an gemahlenem Kaffee einfüllbar ist, wobei die Brühvorrichtung einen Brühkolben umfasst, welcher zum wiederholten Verschliessen und Öffnen der Brühkammer beweglich aufgenommen ist. Über die Brühwasser-Zulaufleitung ist erhitztes Brühwasser in die Brühkammer einleitbar, wobei in der Brühwasser-Zulaufleitung die zweite Heizeinrichtung angeordnet ist, um das Brühwasser individuell nach Bedarf auf die zweite Temperatur T₂ zu erhitzen. Bevorzugt entspricht die zweite Temperatur T₂ der optimalen Temperatur für die zu brühende Kaffeespezialität und liegt vorzugsweise zwischen 80°C und 98°C. Es kann auch vorgesehen sein, dass die Temperatur während des Brühvorgangs variiert, beispielsweise mittels der zweiten Heizeinrichtung ein Temperaturprofil in dem Brühwasser erzeugt wird, um einen Brühvorgang mit einer niedrigeren Temperatur, schonend für das gemahlene Kaffeegut, zu beginnen und dann entlang des Temperaturprofils die Temperatur auf die entsprechende optimale Temperatur zu erhöhen.

Ferner kann die Brühvorrichtung eine Bypass-Zulaufleitung umfassen, über welche eine definierbare Menge an erhitztem Wasser als Bypass-Wasser zuführbar, an der in der Brühkammer eingefüllten Menge an gemahlenem Kaffee vorbei geleitet und stromabwärts der Brühkammer mit dem aus diesem austretenden gebrühten Kaffee zusammengeführt wird. Dabei kann die Temperatur des Bypass-Wassers ebenfalls individuell mittels der zweiten Heizeinrichtung eingestellt werden. Das Bypass-Wasser ist insbesondere für die Zubereitung eines Cafe Americano relevant.

Erfindungsgemäss ist die in dem Brühmodul aufgenommene zweite Heizeinrichtung eine als Durchlauferhitzer ausgebildete Dickschichtheizung. Die zweite Heizeinrichtung ist derart eingerichtet, dass sie einerseits eine mit einem Heizelement erzeugte Wärme gut an das bereits in der ersten Heizeinrichtung erwärmte, die zweite Heizeinrichtung durchströmende Brühwasser überträgt und andererseits eine kleine Masse aufweist, so dass diese schnell und zuverlässig regelbar und nach einer Ruhepause wieder aktivierbar ist, d.h. eine steile Regelkurve bzw. eine kurze Totzeit aufweist. In der zweiten Heizeinrichtung, ausgebildet als Durchlauferhitzer, steht das zu erhitzende Wasser entlang eines bereitgestellten Strömungswegs in thermischem Kontakt mit dem Heizelement. Die zweite Heizeinrichtung umfasst eine elektrische Widerstandsheizung, ausgebildete als Dickschichtheizung. Hierfür ist das Heizelement auf einem Substrat, vorzugsweise einem keramischen Substrat, mit einer gewissen Schichtdicke aufgebracht, so dass dieses eine begrenzte Wärmekapazität aufweist. Eine derartige Dickschichtheizung zeichnet sich durch eine relativ geringe Verzögerung im Regelverhalten aus, so dass eine gleichmässige Wärmeübertragung auf das strömende Wasser erreicht ist.

Durch die Anordnung der zweiten Heizeinrichtung in dem Brühmodul können kurze Verbindungswege zwischen dieser und der Brühkammer des Brühmoduls realisiert werden, so dass Temperaturverluste entlang des Strömungsweges des Brühwassers minimiert werden.

Die zweite Temperatur T₂, auf welche das aus der ersten Heizeinrichtung entnommene Wasser individuell in der zweiten Heizeinrichtung erhitzt wird, richtet sich nach der optimalen Temperatur in Abhängigkeit der zu erzeugenden Kaffeespezialität und liegt im Allgemeinen zwischen 80°C bis 98°C, bevorzugt zwischen 85°C und 95°C. Dabei ist zu beachten, dass einerseits bei einer zu hohen Brühwassertemperatur vermehrt Bitterstoffe aus dem zu extrahierenden Kaffee gelöst werden und andererseits bei einer zu tiefen Brühwassertemperatur nicht ausreichend Aromastoffe extrahiert werden, so dass der Geschmack unbefriedigend ist.

In einer Ausführungsform ist vorgesehen, dass in dem Wassermodul zusätzlich eine dritte Heizeinrichtung stromabwärts der ersten Heizeinrichtung vorgesehen ist, so dass das zur Verwendung als Bypass-Wasser und/oder zur Zubereitung von Tee auf die erste Temperatur T₁ erwärmtes Wasser einer weiteren, der dritten Heizeinrichtung zugeführt wird, welche dem Wassermodul zugeordnet ist.

So kann das in dem Boiler bevorratete in einer ersten Stufe erwärmte Wasser weiter individuell erhitzt werden und nicht nur über die Brühwasser-Zulaufleitung dem Brühmodul als Brühwasser zur Verfügung gestellt werden, sondern auch über entsprechend vorgesehene Heisswasserleitungen aus dem Boiler gefördert und der Bypass-Zulaufleitung und/oder einer weiteren Verwendung zur Zubereitung von Tee oder anderen Infusionsgetränken zugeführt werden. Die dritte Heizeinrichtung ist dem Wassermodul zugeordnet, und in dem das Wassermodul begrenzenden Wassermodulgehäuse aufgenommen. Erfindungsgemäss ist die dritte Heizeinrichtung eine als Durchlauferhitzer ausgebildete Dickschichtheizung mit einem definierten Strömungsweg für das zu erhitzende Wasser. In dem umfassten Leitungssystem können weitere Einrichtungen angeordnet sein, welche zur gesteuerten Förderung und Dossierung von Wasser erforderlich sind. Vorzugsweise sind diese Einrichtungen stromabwärts der ersten Heizeinrichtung und stromaufwärts der dritten Heizeinrichtung angeordnet. Die mittels der dritten Heizeinrichtung einstellbare Temperatur T₃ des derart erhitzten Wassers liegt vorzugsweise zwischen 70°C und 98°C. Das temperierte Wasser kann über ein Leitungssystem dem Brühmodul oder mehreren Brühmodulen der Kaffeemaschine als Bypass-Wasser zugeleitet werden, wobei getrennte Zulaufleitungen zu dem oder mehreren Brühmodulen vorgesehen sind. Demnach können auch die mehreren Brühmodule unterschiedlich ausgebildet sein. Darüber hinaus kann es zu einer Ausgabeeinheit für erhitztes Wasser zur Zubereitung von Tee oder anderen Infusionsgetränken geleitet werden, wobei es in geeigneter Weise mit kaltem Wasser gemischt werden kann. So können beispielsweise zum Zubereiten von grünem Tee die optimale Temperatur von ca. 70°C und die für schwarzen Tee oder Kräutertee von ca. 95°C bereitgestellt werden.

In einer Ausführungsform der Kaffeemaschine ist vorgesehen, dass das Wassermodul eine individuelle Steuereinrichtung aufweist, mittels dieser die erste Heizeinrichtung und die dritte Heizeinrichtung sowie Einrichtungen zum Fördern und Dossieren von Wasser möglich ist. Ferner kann auch das Brühmodul eine individuelle Steuereinrichtung aufweisen zur Steuerung der zweiten Heizeinrichtung und von Einrichtungen zum Fördern, Dossieren und Brühen. Zusätzlich kann eine zentrale Steuereinheit vorgesehen sein zur Steuerung der ersten, zweiten und/oder dritten Heizeinrichtung und Einrichtungen zum Fördern, Dossieren und Brühen.

Für einen optimalen Brühvorgang ist neben der exakt eingestellten Temperatur bzw. einem Temperaturprofil auch eine exakte Dosierung der Menge an Brühwasser von Bedeutung, welche auf das jeweilige Heizelement abstimmbar ist. Hierfür sind unterschiedliche Drosseleinrichtungen in dem Brühwasser führenden Leitungs- und Heizsystem anordenbar, welche je nach zu zubereitender Kaffeespezialität hinsichtlich Durchmesser variieren bzw. entsprechend einstellbar sind. So erweisen sich zur Zubereitung von Espresso ein Drosseldurchmesser von ca. 0,4mm bis 0,6mm, für Cafe Creme und/oder Americano von ca. 0,7mm bis 0,9mm und zur Verwendung als Bypass-Wasser von ca. 0,5mm bis 0,8mm als vorzugsweise geeignet.

Die erfindungsgemässe Kaffeemaschine kann in einer Ausführungsform vergleichbar einer Siebträgermaschine ausgebildet sein, wobei in der Brühvorrichtung eine Halterung vorgesehen ist, in welche ein Siebträger mit einem Sieb aufnehmbar ist, in den eine definierte Menge an Kaffee einfüllbar ist. Die Brühvorrichtung umfasst einen Brühkolben, welcher zum wiederholten Verschliessen und Öffnen der Brühkammer beweglich aufgenommen ist. Dabei kann auch vorgesehen sein, dass ein zumindest von Hand bewegbarer Betätigungshebel vorgesehen ist, wobei bei Bewegung des Betätigungshebels in eine Richtung der Brühkolben in der Brühkammer in eine Pressstellung und/oder eine Brühstellung verschoben wird. Ferner sind Stellmittel mit einem Fluidsystem vorgesehen, welche mindestens eine erste Zylinder/Kolbenanordnung umfassen, wobei der Betätigungshebel derart in Wirkverbindung mit einem Kolben der ersten Zylinder/Kolbenanordnung und mit Stellmitteln steht, dass bei Bewegung des Betätigungshebels in eine Richtung Druck in dem Fluidsystem aufgebaut wird, wobei der in einer zweiten Zylinder/Kolbenanordnung angeordnete Brühkolben in der Brühkammer in die Pressstellung und/oder die Brühstellung verschoben wird.

### Kurzbeschreibung der Zeichnungen

Ein Ausführungsbeispiel der Erfindung wird nachfolgend anhand der Zeichnung näher erläutert. Es zeigen:
Figur 1 schematisch eine erfindungsgemässe Kaffeemaschine zum Zubereiten eines Heissgetränks mit einem Heizsystem zum dynamischen Heizmanagement;
Figur 2 schematisch ein Wassermodul der erfindungsgemässen Kaffeemaschine; und
Figur 3 schematisch ein Brühmodul der erfindungsgemässen Kaffeemaschine.

### Detaillierte Beschreibung der bevorzugten Ausführungsformen

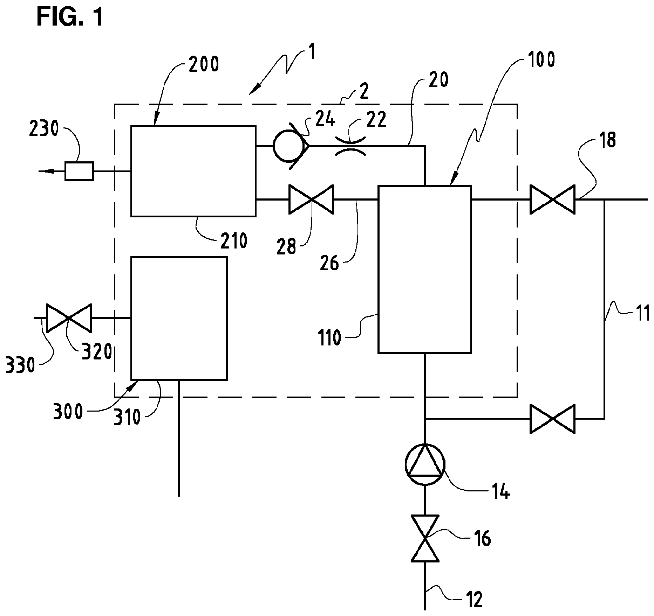

Figur 1 zeigt schematisch eine erfindungsgemässe Kaffeemaschine 1, umfassend ein Wassermodul 100, mindestens ein Brühmodul 200 und in der dargestellten Ausführungsvariante ein Dampfmodul 300, welche in einem Gehäuserahmen 2 zusammengefasst sind. Die Module sind miteinander elektrisch und fluidleitend verbunden, wie zumindest teilweise in Fig. 1 dargestellt. Das Wassermodul 100 umfasst ein Wassermodulgehäuse 110, das Brühmodul 200 ein Brühmodulgehäuse 210 und das Dampfmodul 300 ein Dampfmodulgehäuse 310, wobei jeweils in den Gehäusen entsprechende Einrichtungen zum Fördern, Dosieren und/oder Brühen und/oder Steuern aufgenommen sind (nicht dargestellt).

Weitere Einzelheiten der Kaffeemaschine 1 werden nicht dargestellt, insbesondere nicht solche, welche sich auf Einrichtungen zur Bevorratung und/oder Mahlen von Kaffee bzw. Kaffeepulver, Fördereinrichtung desselben, sowie eine zentrale Steuereinheit und Betätigungsmittel und Steuermittel beziehen, welche darüber hinaus zur Zubereitung von Kaffee erforderlich sind. Ebenfalls nicht dargestellt ist ein Spülsystem der Kaffeemaschine 1, welches eingerichtet ist, fluidleitende Verbindungen zu spülen und/oder zu entleeren.

In Figur 1 ist dargestellt, dass vorzugsweise kaltes Frischwasser über ein Frischwasserzulauf 12 von einer Wasserquelle bzw. einem Leitungswassersystem mittels einer Wasserpumpe 14 über ein vorzugsweise steuerbares Ventil 16 dem Wassermodul 100 zugeleitet wird. Die Menge an zugeleitetem Wassers ist mittels eines Durchflussmessers (nicht dargestellt) erfassbar und der erfasste Wert ist an eine nicht dargestellte Steuereinrichtung des Wassermoduls und/oder eine zentrale Steuereinheit übermittelbar. Dargestellt ist eine Ablaufleitung 18, über welche in dem Wassermodul 100 erwärmtes Wasser einer nicht dargestellten Ausgabeeinheit dosiert zugeleitet werden kann, eventuell kombiniert mit einer über Leitung 11 zugeführten, definierbaren Menge kalten Wassers, zur Zubereitung von Tee oder anderen Infusionsgetränken.

Ferner ist an das Wassermodule 100 ein Leitungssystem zur Verbindung mit dem Brühmodul 200 anschliessbar. Das Leitungssystem umfasst eine erste Leitung 20, in dessen Verlauf beispielsweise eine Drosseleinrichtung 22 und ein Rückschlagventil 24 angeordnet sind und mittels dieser das Brühmodul 200 mit erwärmtem Brühwasser als Bypass-Wasser beaufschlagbar ist, welches zur Zubereitung von Cafe Americano eingesetzt wird. Das Leitungssystem umfasst ferner eine zweite Leitung 26 zur fluidleitenden Verbindung des Wassermoduls 100 mit dem Brühmodul 200, in welcher in dem dargestellten Ausführungsbeispiel ein steuerbares Ventil 28 angeordnet und über welche das Brühmodul 200 mit erhitztem Brühwasser beaufschlagbar ist. Das mindestens eine Brühmodul 200 ist eingerichtet zum Brühen einer vorgegebenen Menge an Kaffee und zur Abgabe frisch gebrühten Kaffees an mindestens einer Ausgabeeinheit 230. Beispielsweise wird eine in dem Brühmodul 200 angeordnete Brühkammer 240 zur Zubereitung einer Kaffeespezialität mit dosiertem, erhitztem und unter Druck stehendem Brühwasser über die Leitung 26 beaufschlagt.

Der Kaffeemaschine 1 zugeordnet und in dem Gehäuserahmen 2 als separate Einheit angeordnet ist das Dampfmodul 300, welches ebenfalls mit Wasser, vorzugsweise Frischwasser, beaufschlagbar und eingerichtet ist, um Wasserdampf an einem Dampfauslass 330, gesteuert durch ein Ventil 320, beispielsweise zur Zubereitung von Milchschaum abzugeben.

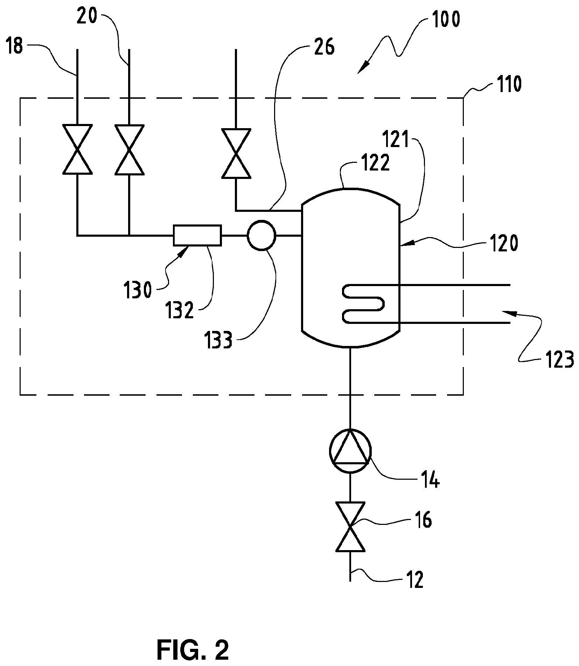

In Figur 2 ist das Wassermodul 100 der erfindungsgemässen Kaffeemaschine 1 dargestellt. Das Wassermodul 100 ist modular aufgebaut, vorzugsweise sind umfasste Einrichtungen und Elemente in dem Wassermodulgehäuse 110 angeordnet und miteinander elektrisch und/oder fluidleitend verbunden.

Umfasst ist eine erste Heizeinrichtung 120, in dem dargestellten Ausführungsbeispiel ausgebildet als Boiler 121. Der Boiler 121 weist einen Wassertank 122 auf, dessen Fassungsvolumen an die Anzahl der mit der Kaffeemaschine 1 zuzubereitenden Kaffeeportionen angepasst ist. Vorzugsweisse im unteren Bereich des Boilers 121 ist der Frischwasserzulauf 12 angeordnet, über welchen mittels der Wasserpumpe 14 und dem Ventil 16 Frischwasser dosiert zugeleitet wird. Ferner ist ein erstes Heizelement 123 der ersten Heizeinrichtung 120 schematisch dargestellt, beispielsweise ausgebildet als ein- oder mehrstufige Heizwendel, welche das in dem Wassertank 122 gefüllte Wasser auf eine erste Temperatur T₁ erwärmt. Die Temperatur T₁ kann vorzugsweise geringfügig niedriger sein als diejenige Temperatur, die zum optimalen Brühen des Kaffeegetränks erforderlich ist, welche im Regelfall zwischen 85°C und 95°C liegt. An dem Boiler 120 kann ein Temperatursensor (nicht dargestellt) angeordnet sein, der die Erwärmung des im Wassertank 122 bevorrateten Wassers erfasst und Temperaturwerte an die Steuereinrichtung des Wassermoduls und/oder eine zentrale Steuereinheit übermittelt, welche die erste Heizeinrichtung 120 und weitere Einrichtungen des Wassermoduls entsprechend steuert. Ferner sind nicht dargestellte Sensoren zur Erfassung des Füllstands im Wassertank 122 vorgesehen. Vorteilhaft ergibt sich, dass bei der Erwärmung des Brühwassers in der ersten Heizeinrichtung 120 der in dem Frischwasser enthaltene Kalk dort ausfällt und demnach nicht in dem Leitungssystem und in den Einrichtungen stromabwärts der ersten Heizeinrichtung 120, was zum Verstopfen dieser Elemente führen würde.

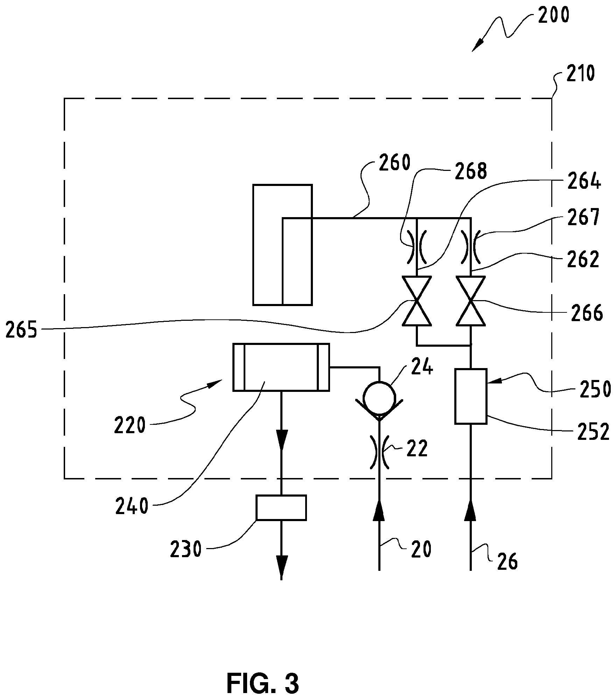

Das in der ersten Heizeinrichtung 120 auf die erste Temperatur T₁ erwärmte Wasser steht nun zur weiteren Verwendung zur Verfügung. Demnach kann über die im oberen Bereich des Boilers 121 angeordnete zweite Leitung 26 Wasser, erwärmt auf die Temperatur T₁, dem Brühmodul 200 und dort direkt seiner Verwendung als Brühwasser zugeführt werden. Dies wird noch mit Bezug auf Figur 3 näher erläutert. Im Falle mehrerer Brühmodule 200 ist das Leitungssystem zur fluidleitenden Verbindung von dem Wassermodul 100 mit den mehreren Brühmodulen 200 entsprechend ausgelegt.

Die Ablaufleitung 18 zur fluidleitenden Verbindung zur Abgabe von Wasser zur Zubereitung von Tee und/oder die erste Leitung 20 zur fluidleitenden Verbindung mit dem Brühmodul 200 sind ebenfalls am oberen Bereich des Boilers 121 angeordnet, wobei erfindungsgemäss das aus dem Boiler 121 entnommene erwärmte Wasser stromabwärts des Boilers 121 einer dritten Heizeinrichtung 130 zugeführt wird. Die dritte Heizeinrichtung 130 ist als Durchlauferhitzer ausgebildet, vorzugsweise als Dickschichtheizung 132. Hierzu umfasst die dritte Heizeinrichtung 130 eine als keramische Dickschichtheizung 132 ausgebildete elektrische Widerstandsheizung, wobei das Heizelement auf einem keramischen Substrat aufgebracht ist und in thermischem Kontakt dazu ein Strömungsweg für das zu erhitzende Wasser zur Verfügung steht. Die dritte Heizeinrichtung 130 erhitzt das Wasser auf eine Temperatur T₃, welche der optimalen Temperatur für die weitere Verwendung, d.h. als Bypass-Wasser oder zur Zubereitung von Tee oder anderen Infusionsgetränken angepasst ist. In der fluidleitenden Verbindung zwischen erster Heizeinrichtung 120 und dritter Heizeinrichtung 130 ist eine Drosseleinrichtung 133 anordenbar, welches die Durchflussmenge an strömendem Wasser regelt, wobei entsprechende Information an eine Steuereinrichtung und/oder eine zentrale Steuereinheit übermittelt werden kann. Demnach kann eine Steuerung vorgesehen sein, um die dritte Heizeinrichtung 130 in Abhängigkeit von Durchflussmenge und Temperatur des zugeleiteten Wassers zu aktivieren bzw. zu deaktivieren.

Gerade bei der Bereitstellung von Bypass-Wasser ist eine exakte Dossierung der Wassermenge erforderlich. Diese sollte auf die Extraktionsdauer zur Zubereitung des Kaffees abgestimmt sein, so dass sowohl gebrühter Kaffee als auch Bypass-Wasser während einer Zeitdauer gemeinsam in eine bereitgestellte Tasse abgegeben wird. Erreicht wird dies beispielsweise durch die Drosseleinrichtung 133, welche entweder einstellbar sein kann oder deren Durchmesser entsprechend ausgewählt ist. Der Durchmesser sollte nicht zu gross sein, dass der Auslauf an Bypass-Wasser nicht stossartig ist. Allerdings ergibt sich bei einem zu kleinen Durchmesser das Problem, dass Bypass-Wasser über einen längeren Zeitraum ausgegeben wird und dabei eventuell die Extraktionsdauer des Kaffees überdauert. Der Strömungsweg des Bypass-Wassers erfolgt mittels der ersten Leitung 20, in dessen Verlauf beispielsweise die Drosseleinrichtung 22 und das Rückschlagventil 24 angeordnet sind.

Das Brühmodul 200 der erfindungsgemässen Kaffeemaschine 1 ist in Figur 3 dargestellt. Das Brühmodul 200 ist ebenfalls modular aufgebaut, wobei dieses, angeordnet in dem Brühmodulgehäuse 210, mindestens eine Brühvorrichtung 220 zum Brühen einer vorgegebenen Menge an Kaffee mit einem unter Druck stehenden dosierten Brühwasser und eine Ausgabeeinheit 230 zur Abgabe frisch gebrühten Kaffees umfasst. Insbesondere weist die Brühvorrichtung 220 in einer Brüheinheit eine Brühkammer 240 auf, in welche eine vorgegebene Menge an Kaffee aufnehmbar und in welche über eine Brühwasser-Zulaufleitung 260 das dosierte Brühwasser einleitbar ist.

Ferner umfasst das Brühmodul 200 Einrichtungen, um das Brühwasser unter Druck auf eine definierte Temperatur zu erhitzen. Das Brühwasser, welches letztlich in die Brühkammer 240 eingeleitet wird, ist mittels der ersten Heizeinrichtung 120 auf die erste Temperatur T₁ erwärmt und wird über fluidleitende Verbindungen, bzw. über die zweite Leitung 26 und der Brühwasser-Zulaufleitung 260, der Brühkammer 240 zugeleitet, wobei es mittels einer zweiten Heizeinrichtung 250 weiter erhitzt wird.

In der dargestellten Ausführungsform ist vorgesehen, dass parallele Strömungswege 262, 264 stromaufwärts der Brühkammer 240 und stromabwärts der zweiten Heizeinrichtung 250 vorgesehen sind. In den parallelen Strömungswegen 262, 264 sind jeweils ein Ventil 265, 266 und eine Drosseleinrichtung 267, 268 angeordnet. Mittels der Drosseleinrichtungen 267, 268 kann wahlweise dosiertes Wasser zum Zubereiten von Espresso und von Cafe Creme bzw. Americano bereitgestellt werden, wobei zum Zubereiten von Espresso eine kleinere Menge an Brühwasser gefordert ist als diejenige Menge zum Zubereiten von Cafe Creme/Americano. Demnach können sich Düsendurchmesser der Drosseleinrichtungen 267, 268 hinsichtlich ihres Durchmessers unterscheiden.

Dem Brühmodul 200 zugeordnet und in dem Brühmodulgehäuse 210 aufgenommen ist die zweite Heizeinrichtung 250, welche als Durchlauferhitzer als Dickschichtheizung 252 ausgebildet ist. Die zweite Heizeinrichtung 250 ist eingerichtet, das entlang eines darin bereitgestellten Strömungswegs geleitete Brühwasser auf eine einstellbare Temperatur T₂ zu erhitzen. Das in der zweiten Heizeinrichtung 250 umfasste Heizelement ist als elektrische Widerstandsheizung bzw. als Dickschichtheizung 252 ausgebildet und von einer Steuereinrichtung des Brühmoduls 200 und/oder einer zentralen Steuereinheit entsprechend Vorgaben steuerbar. Hierfür kann mindestens ein Temperatursensor (nicht dargestellt) mit Bezug zu der zweiten Heizeinrichtung 250 vorgesehen sein, welcher einen Temperaturmesswert vorzugsweise an der Ausgangsseite und/oder an der Eingangsseite ermittelt und diese an die Steuereinrichtung des Brühmoduls und/oder der zentralen Steuereinheit übermittelt. So kann eine Steuerung den an der elektrischen Widerstandsheizung anliegenden elektrischen Strom in Abhängigkeit von Temperaturmesswerten steuern. Die Anordnung der zweiten Heizeinrichtung 250 in dem Brühmodul 200 erlaubt kurze Strömungswege bis zum Eintritt des erhitzten Brühwassers in die Brühkammer 240 stromabwärts der zweiten Heizeinrichtung 250, so dass das erhitzte Brühwasser temperiert auf eine optimale Temperatur in die Brühkammer 240 ohne signifikante Temperaturschwankungen eingeleitet werden kann. Das derart erhitzte Brühwasser kann innerhalb der Brühvorrichtung 220 verwendet werden, das Kaffeegetränk durch Durchleiten bzw. Durchdrücken des Brühwassers durch das in der Brühkammer 240 aufgenommene Kaffeepulver zu brühen und an der Ausgabeeinheit 230 als frisch gebrühte Kaffeespezialität auszugeben.

## Patentansprüche

1. Kaffeemaschine (1) zum Zubereiten eines Heissgetränks, umfassend
einen Gehäuserahmen (2), in welchen aufgenommen sind:
- ein Wassermodul (100) zum Bereitstellen von Brühwasser, wobei das Wassermodul (100) ein Wassermodulgehäuse (110) und eine in dem Wassermodulgehäuse (110) aufgenommene erste Heizeinrichtung (120) umfasst, welche erste Heizeinrichtung (120) einen Boiler (121) mit einem Wassertank (122) mit einem Frischwasserzulauf (12) und einem ersten Heizelement (123) zum Erwärmen von Wasser auf eine erste Temperatur T₁ umfasst, und
- ein Brühmodul (200), umfassend ein Brühmodulgehäuse (210) und in dem Brühmodulgehäuse (210) angeordnet eine Brühvorrichtung (220) zum Brühen einer vorgegebenen Menge Kaffee mit Brühwasser und eine Ausgabeeinheit (230) zur Abgabe gebrühten Kaffees, sowie angeordnet in einer Brühwasser-Zulaufleitung (260) eine zweite Heizeinrichtung (250), um das auf die erste Temperatur T₁ erwärmte Wasser stromaufwärts der Brühvorrichtung (220) auf eine zweite Temperatur T₂ zu erhitzen,
**dadurch gekennzeichnet, dass**
die in dem Brühmodul (200) aufgenommene zweite Heizeinrichtung (250) eine als Durchlauferhitzer ausgebildete Dickschichtheizung (252) ist.

2. Kaffeemaschine (1) nach Anspruch 1, **dadurch gekennzeichnet, dass** eine dritte Heizeinrichtung (130) in dem Wassermodul (100) stromabwärts der ersten Heizeinrichtung (120) aufgenommen ist.

3. Kaffeemaschine (1) nach Anspruch 2, **dadurch gekennzeichnet, dass** die dritte Heizeinrichtung (130) eine als Durchlauferhitzer ausgebildete Dickschichtheizung (132) ist.

4. Kaffeemaschine (1) nach einem der vorhergehenden Ansprüche, **dadurch gekennzeichnet, dass** die mittels der ersten Heizvorrichtung (120) einstellbare erste Temperatur T₁ des Wassers zwischen 70°C und 85°C liegt.

5. Kaffeemaschine (1) nach einem der vorhergehenden Ansprüche, **dadurch gekennzeichnet, dass** die mittels der zweiten Heizvorrichtung (250) einstellbare Temperatur T₂ des Wassers zwischen 80°C und 98°C liegt.

6. Kaffeemaschine (1) nach einem der vorhergehenden Ansprüche, **dadurch gekennzeichnet, dass** die zweite Heizeinrichtung (250) eingerichtet ist, das Wasser gemäss einem vorgegebenen Temperaturverlauf auf die einstellbare zweite Temperatur T₂ zu erhitzen.

7. Kaffeemaschine (1) nach einem der vorhergehenden Ansprüche 2 bis 6, **dadurch gekennzeichnet, dass** die mittels der dritten Heizeinrichtung (130) einstellbare Temperatur T₃ des Wassers zwischen 70°C und 98°C liegt.

8. Kaffeemaschine (1) nach einem der vorhergehenden Ansprüche 2 bis 7, **dadurch gekennzeichnet, dass** das mittels der dritten Heizeinrichtung (130) erhitzte Wasser als Bypass-Wasser der Brühvorrichtung (220) zugeleitet und stromabwärts einer Brühkammer (240) der Brühvorrichtung (220) mit dem in der Brühvorrichtung (220) gebrühten Kaffee zusammengeführt und an der Ausgabeeinheit (230) abgegeben wird.

9. Kaffeemaschine (1) nach einem der vorhergehenden Ansprüche 2 bis 8, **dadurch gekennzeichnet, dass** das mittels der dritten Heizeinrichtung (130) erhitzte Wasser mittels einer Ablaufleitung (18) einer Ausgabeeinheit zugeführt und mit kaltem Wasser gemischt wird zur Zubereitung von Tee oder ähnlichen Infusionsgetränken.

10. Kaffeemaschine (1) nach einem der vorhergehenden Ansprüche, **dadurch gekennzeichnet, dass** die Brühvorrichtung (220) eine Halterung umfasst, in welche ein Siebträger mit einem Sieb aufnehmbar ist, in den eine definierte Menge an Kaffee einfüllbar ist, wobei die Brühvorrichtung (220) einen Brühkolben umfasst, welcher zum wiederholten Verschliessen und Öffnen der Brühkammer (240) beweglich aufgenommen ist.

11. Kaffeemaschine (1) nach einem der vorhergehenden Ansprüche,, umfassend
- einen Betätigungshebel, welcher zumindest teilweise von Hand bewegbar ist, wobei bei Bewegung des Betätigungshebels in eine Richtung der Brühkolben in der Brühkammer (240) in eine Pressstellung und/oder eine Brühstellung verschoben wird,
- sowie Stellmittel mit einem Fluidsystem, welche mindestens eine erste Zylinder/Kolbenanordnung umfassen, wobei der Betätigungshebel derart in Wirkverbindung mit einem Kolben der ersten Zylinder/Kolbenanordnung und mit Stellmitteln steht, dass bei Bewegung des Betätigungshebels in eine Richtung Druck in dem Fluidsystem aufgebaut wird, wobei der in einer zweiten Zylinder/Kolbenanordnung angeordnete Brühkolben in der Brühkammer (240) in die Pressstellung und/oder die Brühstellung verschoben wird.

12. Kaffeemaschine (1) nach einem der vorhergehenden Ansprüche, **dadurch gekennzeichnet, dass** diese mehrere Brühmodule (200) umfasst.

13. Kaffeemaschine (1) nach einem der vorhergehenden Ansprüche, **dadurch gekennzeichnet, dass** das Wassermodul (100) eine individuelle Steuereinrichtung umfasst zur Steuerung der ersten Heizeinrichtung (120) und der dritten Heizeinrichtung (130), sowie von Einrichtungen zum Fördern und Dossieren von Wasser.

14. Kaffeemaschine (1) nach einem der vorhergehenden Ansprüche, **dadurch gekennzeichnet, dass** das Brühmodul (200) eine individuelle Steuereinrichtung umfasst zur Steuerung der zweiten Heizeinrichtung (250) und von Einrichtungen zum Fördern, Dossieren von Brühwasser und Brühen.

15. Kaffeemaschine (1) nach einem der vorhergehenden Ansprüche, **dadurch gekennzeichnet, dass** eine zentrale Steuereinheit umfasst ist zur Steuerung der ersten, zweiten und dritten Heizeinrichtungen (120, 250, 130) und Einrichtungen zum Fördern, Dossieren und Brühen.

## Claims

1. Coffee machine (1) for preparation of a hot beverage, comprising
a housing frame (2), in which are accommodated:
- a water module (100) for providing brewing water, whereby the water module (100) comprises a first heating device (120), which first heating device (120) comprises a boiler (121) with a water tank (122) with a fresh water inlet (12) and a first heating element (123) for heating water to a first temperature T₁, and
- a brewing module (200), with a brewing device (220) for brewing a predefined amount of coffee with brewing water and with a dispensing unit (230) for dispensing brewed coffee, as well as, disposed in a brewing water feed line (260), a second heating device (250), to heat the water heated to the first temperature T₁ upstream of the brewing device (220) to a second temperature T₂,
**characterized in that**
the second heating device (250) accommodated in the brewing module (200) is a thick film heater (252) designed as continuous flow heater.

2. Coffee machine (1) according to claim 1, **characterized in that** accommodated in the water module (100) is a third heating device (130) downstream of the first heating device (120).

3. Coffee machine (1) according to claim 2, **characterized in that** the third heating device (130) is a thick film heater (132) designed as continuous flow heater.

4. Coffee machine (1) according to one of the preceding claims, **characterized in that** the first temperature T₁ of the water adjustable by means of the first heating device (120) is between 70°C and 85°C.

5. Coffee machine (1) according to one of the preceding claims, **characterized in that** the temperature T₂ of the water adjustable by means of the second heating device (250) is between 80°C and 98°C.

6. Coffee machine (1) according to one of the preceding claims, **characterized in that** the second heating device (250) is set up to heat the water according to a predetermined temperature profile to the adjustable second temperature T₂.

7. Coffee machine (1) according to one of the preceding claims 2 to 6, **characterized in that** the temperature T₃ of the water adjustable by means of the third heating device (130) is between 70°C and 98°C.

8. Coffee machine (1) according to one of the preceding claims 2 to 7, **characterized in that** the water heated by means of the third heating device (130) is fed as bypass water to the brewing device (220), and downstream of a brewing chamber (240) of the brewing device (220) is brought together with the coffee brewed in the brewing device (220) and is dispensed at the dispensing unit (230).

9. Coffee machine (1) according to one of the preceding claims 2 to 8, **characterized in that** the water heated by means of the third heating device (130) is fed to a dispensing unit by means of a drain line (18) and is mixed with cold water, for preparation of tea or similar infused beverages.

10. Coffee machine (1) according to one of the preceding claims, **characterized in that** the brewing device (220) comprises a support, in which a portafilter with a filter is receivable, in which a predefined amount of coffee is fillable, whereby the brewing device (220) comprises a brewing piston which is accommodated in a movable way for repeated closing and opening of the brewing chamber (240).

11. Coffee machine (1) according to one of the preceding claims, comprising
- an operating lever, which is movable at least partly by hand, whereby with movement of the operating lever in one direction the brewing piston in the brewing chamber (240) is pushed into a pressing position and/or a brewing position,
- and adjustment means with a fluid system, which comprise at least one first cylinder/piston configuration, whereby the operating lever is in operative connection with a piston of the first cylinder/piston configuration and with adjustment means such that with movement of the operating lever in one direction pressure is built up in the fluid system, whereby the brewing piston disposed in a second cylinder/piston configuration in the brewing chamber (240) is pushed into the pressing position and/or the brewing position.

12. Coffee machine (1) according to one of the preceding claims, **characterized in that** it comprises a plurality of brewing modules (200).

13. Coffee machine (1) according to one of the preceding claims, **characterized in that** the water module (100) comprises an individual control device for control of the first heating device (120) and of the third heating device (130), as well as devices for conveying and metering of water.

14. Coffee machine (1) according to one of the preceding claims, **characterized in that** the brewing module (200) has an individual control device for control of the second heating device (250) and devices for conveying, metering of brewing water and brewing.

15. Coffee machine (1) according to one of the preceding claims, **characterized in that** a central control unit is included for control of the first, second and third heating devices (120, 250, 130) and devices for conveying, metering and brewing.

## Revendications

1. Machine à café (1) destinée à préparer une boisson chaude, comprenant
un cadre de logement (2), dans lequel sont agencés :
- un module d'eau (100) pour l'approvisionnement en eau de brassage, le module d'eau (100) comprenant un boîtier de module d'eau (110) et un premier dispositif de chauffage (120) logé dans le boîtier de module d'eau (110), lequel premier dispositif de chauffage (120) comprend une bouilloire (121) comportant un réservoir d'eau (122) pourvue d'une entrée d'eau froide, (12) et un premier élément de chauffage (123) pour chauffer l'eau à une première température T₁, et
- un module de brassage (200), comportant un un boîtier de module de brassage (210) et, disposé dans le boîtier de module de brassage (210), un dispositif de brassage (220) pour le brassage d'une quantité prédéfinie de café avec de l'eau de brassage et une unité de distribution (230) pour la distribution du café brassé, ainsi qu'un deuxième dispositif de chauffage (250), disposé sur une ligne d'alimentation en eau de brassage (260), pour chauffer l'eau chauffée à la première température T₁ en amont du dispositif de brassage (220) à une deuxième température T₂,
**caractérisée en ce que**
le deuxième dispositif de chauffage (250) agencé dans le module de brassage (200) est un dispositif à film-résistance chauffante (252) conçu comme chauffe-eau instantané.

2. Machine à café (1) selon la revendication 1, **caractérisée en ce qu'**un troisième dispositif de chauffage (130) est agencé dans le module d'eau (100) en aval du premier dispositif de chauffage (120).

3. Machine à café (1) selon la revendication 2, **caractérisée en ce que** le troisième dispositif de chauffage (130) est un dispositif à film-résistance chauffante (132) conçu comme chauffe-eau instantané.

4. Machine à café (1) selon l'une des revendications précédentes, **caractérisée en ce que** la première température T₁ de l'eau, ajustable au moyen du premier dispositif de chauffage (120), se situe entre 70°C et 85°C.

5. Machine à café (1) selon l'une des revendications précédentes, **caractérisée en ce que** la température T₂ de l'eau, ajustable au moyen du second dispositif de chauffage (250), se situe entre 80°C et 98°C.

6. Machine à café (1) selon l'une des revendications précédentes, **caractérisée en ce que** le deuxième dispositif de chauffage (250) est réglé pour chauffer l'eau selon un profil de température prédéterminé jusqu'à la deuxième température ajustable T₂.

7. Machine à café (1) selon l'une des revendications précédentes 2 à 6, **caractérisée en ce que** la température T₃ de l'eau, ajustable au moyen du troisième dispositif de chauffage (130), se situe entre 70°C et 98°C.

8. Machine à café (1) selon l'une des revendications précédentes 2 à 7, **caractérisée en ce que** l'eau chauffée au moyen du troisième dispositif de chauffage (130) est alimentée en tant qu'eau de dérivation vers le dispositif de brassage (220), et est réinjectée au café brassé dans le dispositif de brassage (220) en aval de la chambre de brassage (240) du dispositif de brassage (220), et est dispensée à l'unité de distribution (230).

9. Machine à café (1) selon l'une des revendications précédentes 2 à 8, **caractérisée en ce que** l'eau chauffée au moyen du troisième dispositif de chauffage (130) est alimentée à une unité de distribution au moyen d'une ligne d'évacuation (18) et est mélangée à de l'eau froide pour la préparation de thé ou de boissons infusées similaires.

10. Machine à café (1) selon l'une des revendications précédentes, **caractérisée en ce que** le dispositif de brassage (220) comprend un support, dans lequel un porte-filtre avec un filtre peut être disposé, dans lequel il est possible de verser une quantité prédéfinie de café, le dispositif de brassage (220) comprenant un piston de brassage qui est agencé de manière mobile de manière à fermer et ouvrir de façon répétée la chambre de brassage (240).

11. Machine à café (1) selon l'une des revendications précédentes, comprenant
- un levier d'actionnement, qui peut être actionné au moins partiellement manuellement, via lequel, en cas de mouvement du levier d'actionnement dans une direction, le piston de brassage dans la chambre de brassage (240) est poussé dans une position de compression et/ou une position de brassage,
- et un moyen d'ajustement comprenant un système de fluides, qui comprend au moins un premier ensemble de cylindre/piston, le levier d'actionnement agissant sur un piston du premier ensemble cylindre/piston, et avec un moyen d'ajustement de telle sorte qu'en cas de mouvement du levier d'actionnement dans une direction, de la pression est générée dans le système de fluides, le piston de brassage disposé dans un deuxième ensemble de cylindre/piston dans la chambre de brassage (240) étant poussé dans la position de compression et/ou la position de brassage.

12. Machine à café (1) selon l'une des revendications précédentes, **caractérisée en ce qu'**elle comprend une pluralité de modules de brassage (200).

13. Machine à café (1) selon l'une des revendications précédentes, **caractérisée en ce que** le module d'eau (100) comprend un dispositif de contrôle individuel pour la commande du premier dispositif de chauffage (120) et du troisième dispositif de chauffage (130), ainsi que des dispositifs pour l'approvisionnement et le dosage de l'eau.

14. Machine à café (1) selon l'une des revendications précédentes, **caractérisée en ce que** le module de brassage (200) possède un dispositif de contrôle individuel pour la commande du deuxième dispositif de chauffage (250) et des dispositifs d'approvisionnement et de dosage de l'eau de brassage, ainsi que de brassage.

15. Machine à café (1) selon l'une des revendications précédentes, **caractérisée en ce qu'**une unité de contrôle centrale est incluse pour la commande des premier, deuxième et troisième dispositifs de chauffage (120, 250, 130) et des dispositifs d'approvisionnement, de dosage et de brassage.
